**Europäisches Patentamt**

**European Patent Office**

**Office européen des brevets**

(19)

(11) Veröffentlichungsnummer: **0 144 535**
**B1**

(12) **EUROPÄISCHE PATENTSCHRIFT**

(45) Veröffentlichungstag der Patentschrift: **16.01.91**

(21) Anmeldenummer: **84109821.3**

(22) Anmeldetag: **17.08.84**

(51) Int. Cl.⁵: **B 03 B 9/04**, B 07 B 9/00, B 03 C 7/00

(54) **Verfahren zur thermischen Behandlung von Abfällen unter Weiterverwertung des entstehenden Rückstandes.**

(30) Priorität: **17.08.83 DE 3330577**

(43) Veröffentlichungstag der Anmeldung:
**19.06.85 Patentblatt 85/25**

(45) Bekanntmachung des Hinweises auf die Patenterteilung:
**16.01.91 Patentblatt 91/03**

(84) Benannte Vertragsstaaten:
**AT BE CH FR GB IT LI NL SE**

(56) Entgegenhaltungen:
**EP-A-0 029 580**
**EP-A-0 067 901**
**DE-A-1 751 974**
**DE-A-2 939 128**
**DE-A-2 950 324**
**FR-A- 876 310**

(73) Patentinhaber: **Deutsche Kommunal-Anlagen Miete GmbH**
**c/o Deutsche Anlagen-Leasing GmbH Wilhelm-Theodor-Römheld-Strasse 30**
**D-6500 Mainz (DE)**

(72) Erfinder: **Hillekamp, Klaus, Dr.**
**Musäusstrasse 3**
**D-8000 München 60 (DE)**
Erfinder: **Berghoff, Rolf, Dr.**
**Lötterfelderstrasse 17**
**D-4005 Büderich (DE)**

(74) Vertreter: **Tetzner, Volkmar, Dr.-Ing. Dr. jur.**
**Van-Gogh-Strasse 3**
**D-8000 München 71 (DE)**

Courier Press, Leamington Spa, England.

**Beschreibung**

Die Erfindung betrifft ein Verfahren zur Aufbereitung des bei der thermischen Behandlung, insbesondere Pyrolyse, von kohlenstoffhaltigen Abfallstoffen entstehenden Rückstandes zwecks Gewinnung von Brennstoffen, gemäß dem Oberbegriff des Anspruches 1.

Die Beseitigung von Abfällen, insbesondere von Hausmüll, wird zunehmend ein Problem. Die herkömmlichste Art der Abfallbeseitigung, die Deponierung, wird ständig schwieriger, da immer weniger Deponierraum zur Verfügung gestellt werden kann.

Die Verbrennung der Abfälle ist zwar mit einer erheblichen Volumenreduzierung verbunden, doch werden infolge eines gestiegenen Umweltbewußtseins immer höhere Anforderungen an die Reduzierung der Schadstoffemissionen gestellt. Schadstoffemissionen erfolgen luftseitig über die Abgase und wasserseitig über das entstehende Abwasser. Ein in letzter Zeit besonders akut gewordenes Problem ist der Ausstoß von Schwermetallen in feinster Form, bedingt durch die hohen Temperaturen der Verbrennung.

Eine weitere Variante der thermischen Behandlung von Abfallstoffen stellt die Pyrolyse dar. Dieses Verfahren wird auch als Entgasung oder Verschwelung bezeichnet. Im vorliegenden Falle wird auch die Vergasung zur Pyrolyse gerechnet. Gekennzeichnet ist dieses Verfahren dadurch, daß die thermische Behandlung der Abfallstoffe unter Luftausschluß bei Temperaturen von 300 bis 600°C durchgeführt wird. Durch die niedrige Temperatur sind die Emissionen an sauren Schadstoffen, d.h. Fluorwasserstoff, Schwefeldioxid und Chlorwasserstoff wesentlich geringer. Auch der Ausstoß von Schwermetallen liegt beträchtlich tiefer.

Ein weiteres Kennzeichen der Pyrolyse von Abfallstoffen ist darin zu sehen, daß ein Rückstand aus organischen Bestandteilen den sogenannten Mineralstoffen, und Kohlenstoff, der den organischen Verbindungen entstammt, entsteht.

Bei Hausmüll sind die Mineralstoffe vorwiegend Glas, Keramik, Metalle, Sand, Steine und Asche. Hinzu kommt noch, daß die Bestandteile des Hausmülls bei der thermischen Behandlung ebenfalls Mineralstoffe freisetzen. So entstehen bei der thermischen Zersetzung von Holz nicht nur Kohlenstoff und die flüchtigen organischen Bestandteile, sondern auch noch Mineralstoffe, wie Siliciumdioxid, Aluminiumoxid, Kalium- und Calciumverbindungen. Die Kunststoffe liefern neben den Füllstoffen Kalk und Gips auch noch die Schwermetalle Barium, Kadmium und Zink. Die Pyrolyse von Papier führt neben den flüchtigen organischen Verbindungen und Kohlenstoff auch noch zur Freisetzung von Aluminium-Magnesium-Silikaten, Gips, Magnesium und Calciumcarbonat sowie auch von Titandioxid. Wesentliche Rückstandsprodukte der thermischen Zersetzung von Altreifen sind neben Rub auch non Eisen- und Zinkverbindungen.

Hinzu kommen Chloride und Sulfate in verschiedenster Form. Wurde dem Abfallstoff bei der Pyrolyse auch noch Kalk zugesetzt, dann findet sich im Rückstand Calciumchlorid.

Eine Ablagerung des Produktes ist prinzipiell möglich. Es ist jedoch zu bedenken, daß sich im Rückstand der Hausmüllpyrolyse immerhin noch 10 bis 20 Gew.-% Kohlenstoff finden, im Falle der Altreifenpyrolyse 30 bis 50 Gew.-% Kohlenstoff. Die Deponierung eines derartigen Produktes bedeutet damit einen erheblichen Energieverlust. Eine Verwertung des Kohlenstoffes ist aufgrund des hohen Mineralstoffanteiles nicht möglich. Eine Verbrennung bereitet Schwierigkeiten, da es durch die zwangsweise hohen Temperaturen von rund 900°C zur Emission der im Rückstand enthaltenen Schwermetalle kommt.

Eine besondere Variante der Pyrolyse stellt die Herstellung von Brennstoff aus Hausmüll dar. Nach diesem Verfahren wird ein möglichst hoher Kohlenstoffgehalt des Rückstandes angestrebt. Dies wird dadurch erreicht, daß bei der Pyrolyse nur soviel Pyrolysegas erzeugt wird, wie zur Aufrechterhaltung des Prozesses erforderlich ist. Das Produkt ist ein kohlenstoffhaltiger Brennstoff, dessen Kohlenstoffgehalt 20 bis 50 Gew.-% beträgt. Nachteilig ist jedoch der hohe Aschenanteil. Auch der Chlor- und Schwermetallanteil sind von Nachteil, da diese Verbindungen bei der Verbrennung anteilig freigesetzt werden.

Ein Verfahren der im Oberbegriff des Anspruches 1 vorausgesetzten Art ist beispielsweise aus EP—A—67 901 bekannt. Hier geht es um die Herstellung von festen, lagerbaren und geruchsneutralen Brennstoffen aus Abfällen insbesondere aus Hausmüll und/oder hausmüllartigem Gewerbemüll, mit einem Feuchtigkeitsgehalt von höchstens 40 Gew.-%. Diese Abfallstoffe werden in einem indirekt beheizten Durchlaufofen entgast. Die entstehenden festen Brennstoffe werden dann in zumindest zwei Fraktionen unterschiedlicher Teilchengröße aufgetrennt, was beispielsweise mittels einer Vermahlungs- und/oder Siebstufe erfolgen kann. Bei den der Erfindung zugrunde liegenden Versuchen hat es sich als wünschenswert erwiesen, ein Verfahren entsprechend der EP—A—67 901, bei dem eine Siebung und eine nachgeschaltete Sortierung des Rückstandes mittels einer Setzmaschine erfolgt, grundlegend zu verbessern.

Der Erfindung liegt daher die Aufgabe zugrunde, das im Oberbegriff des Anspruches 1 vorausgesetzte Aufbereitungsverfahren dahin weiterzuentwickeln, daß mit einer wirtschaftlichen Betriebsweise eine gute Ausbeute des im Rückstand enthaltenen Energiegehaltes erreicht wird.

Diese Aufgabe wird erfindungsgemäß durch die im Kennzeichen des Anspruches 1 angegebenen Merkmale gelöst, wobei sinnvolle Ausgestaltungen und Weiterbildungen der Erfindung aus den Merkmalen der Unteransprüche hervorgehen.

Bei den der Erfindung zugrundeliegenden umfangreichen Versuchen hat sich gezeigt, daß ein wesentlicher Schritt zur Weiterentwicklung des zuletzt beschriebenen bekannten Verfahrens mit einer elektrostatischen Sortierung erreicht werden kann (entsprechend Verfahrensschritt c) Diese Versuche waren jedoch erst dann wirklich erfolgreich, als auch die Verfahrensschritte a) und b) gemäß Kennzeichen des Anspruches 1 gefunden waren. Erst durch die Kombination dieser kennzeichnenden Merkmale des Anspruches 1 wurde es insbesondere möglich, auch solche Rückstände einwandfrei aufzubereiten, die bei einer Pyrolyse anfallen, wenn den Abfallstoffen vor oder während der thermischen Behandlung basische Zusatzstoffe zugesetzt werden. Auf diese Weise kann ein dringendes Bedürfnis erfüllt werden, nämlich aus dem bei der Pyrolyse von Abfallstoffen entstehenden Rückstand aus Kohlenstoff und Mineralstoffen kohlenstoffärmere und mineralstoffreichere Fraktionen abzutrennen. Der verbleibende Rückstand ist dementsprechend kohlenstoffreicher und mineralstoffärmer und kann äußerst vorteilhaft einer entsprechenden Verwertung zugeführt werden.

Bei der Durchführung dieses Verfahrens kann die Abtrennung durch Siebung mit anschließender elektrostatischer Sortierung erfolgen.

Die elektrostatische Sortierung von Stoffgemischen in Einzelkomponenten beruht hierbei darauf, daß man die Oberflächen der Einzelstoffe in elektrisch differenzierten Zustand bringt.

Unter dem Einfluß elektrischer Felder treten bei festen Körpern Aufladungen und/oder Ladungstrennungen auf, deren Größe stoffabhängig ist und durch die Dielektrizitätskonstante, die Influenzierung und die elektrische Leitfähigkeit bestimmt wird. Durch gezielte Maßnahmen können die elektrischen Unterschiede noch verstärkt werden.

Für die Durchführung des erfindungsgemäßen Verfahrens hat es sich als günstig erwiesen, aus dem anfallenden Rückstand vor der elektrostatischen Sortierung die Stoffe größer 10 mm und kleiner 0,01 mm, vorzugsweise größer 3 mm und kleiner 0,05 mm, abzutrennen.

Die abgeschiedenen Fraktionen stören durch ihre Größe die elektrostatische Sortierung. Durch die Reduzierung des Rückstandes auf den Korngrößenbereich von 10 mm bis 0,01 mm, vorzugsweise 3 mm bis 0,05 mm, wird die Abtrennung der kohlenstoffärmeren, mineralstoffreicheren Fraktion erleichtert. Die Abtrennung der gröberen Stoffe, wie Eisen, Glas, Steine, Drahtgeflechte udgl., wie auch der Feinanteil erfolgt durch Siebung. Eisenteile können auch auf magnetischem Wege abgetrennt werden.

Erfindungsgemäß eignen sich für die elektrostatische Sortierung besonders die bei der Pyrolyse von Abfallstoffen trocken gewonnenen und gekühlten Rückstände. Prinzipiell ist es auch möglich, naß ausgetragenes Material nach anschließender Trocknung einzusetzen. Dies ist jedoch weniger günstig, da durch die Behandlung im Wasserbad eine Verschmieren der Oberfläche mit Salzen und damit eine Vereinheitlichung der Oberflächenleitfähigkeit eintritt.

Weiterhin hat es sich als günstig erwiesen, die anfallenden Rückstände vor der elektrostatischen Sortierung auf Temperaturen unterhalb 150°C zu kühlen. Danach erfolgt die Siebung zur Abtrennung der Grob- und Feinanteile. Bei höheren Temperaturen besteht die Gefahr der Entzündung, z.B. der sehr feinen Fraktionen.

Die Rückstände werden im allgemeinen trocken eingesetzt. Zur gezielten Änderung der Oberflächenleitfähigkeit ist es jedoch möglich, diese Rückstände auf einen Wassergehalt von 0,2—5%, vorzugsweise von 0,5—2%, zu bringen.

Nach einer besonderen Ausführungsform des erfindungsgemäßen Verfahrens werden die Rückstände vor der elektrostatischen Sortierung durch Zugabe von Wasser, Durchleiten von wasserdampfhaltiger Luft oder von Wasserdampf auf einen Wassergehalt von 0,2—5%, vorzugsweise 0,5—2% gebracht.

Eine Verbesserung des Sortiereffektes wird durch mehrmalige Wiederholung der elektrostatischen-Sortierung erreicht.

Als Vorrichtungen zur Durchführung der elektrostatischen Sortierung kommen Freifallscheider und Walzenscheider in Frage. Beim Freifallscheider wird das Gemisch zwischen zwei entgegengesetzt geladenen Elektroden aufgegeben. Die Teilchen erfahren während des freien Falls durch das elektrische Feld in Abhängigkeit von ihren elektrischen Eigenschaften eine Ladungsänderung und werden voneinander getrennt.

Der Walzenscheider zählt zu den am häufigsten eingesetzten Vorrichtungen. Der Walzenscheider besteht aus einer Aufgabevorrichtung, der metallischen, rotierenden Transportwalze, die gleichzeitig als geerdeter Gegenpol zur Elektrode dient und einer aktiven Elektrode zur Erzeugung des elektrischen Feldes. Unterhalb der Walze befinden sich Leitbleche, um die verschiedenen Fraktionen von einander zu trennen.

Bei den Walzenscheidern wird hinsichtlich ihres elektrischen Feldes zwischen Walzenscheider mit dynamischem Feld und statischem Feld unterschieden. Als besonders günstig für das erfindungsgemäße Verfahren hat sich der Walzenscheider mit dynamischem Feld erwiesen. In diesem Fall sind die Pole ein Ionisator, entweder ein Draht- oder Metallkamm, und die am Erdpotential liegende Walze. Als Ionisator wird eine Gleichspannung von 20—50 kV erzeugt. Es entsteht ein Sprühfeld zwischen dem Ionisator und der geerdeten Walze. Hierbei werden die auf der Walze befindlichen Teilchen im Bereich des Sprühfeldes von den emitierten Ionen gleichsinnig aufgeladen. Nach Verlassen dieser Zone entladen sie sich entsprechend ihrer elektrischen Leitfähigkeit. Die guten Leiter nehmen hierbei die Ladung der geerdeten Walze an und werden nach Maßgabe der auftretenden Zentrifugalkräfte von dieser abgeworfen. Die schlechten Leiter geben ihre Ladung langsamer ab und bleiben deshalb an der Walze haften.

Beim Walzenscheider mit statischem Feld hat die aktive Elektrode einen Durchmesser von mindestens 15 mm, so daß kein Koronaeffekt auftreten kann. Es wird lediglich ein inhomogenes statisches Feld erzeugt. In seinem Bereich wird die Ladung durch Influenzierung getrennt, die Teilchen nehmen die Polarität der geerdeten Elektrode an und werden von dieser abgestoßen bzw. von der aktiven Elektrode angezogen. Die Ablenkung der Teilchen kann durch ein kombiniertes Feld wesentlich verstärkt werden. Durchläuft das Stoffgemisch nach einem Sprühfeld ein statisches Feld, so bleiben die Nichtleiter in ihrem Verhalten durch dieses Feld unbeeinflußt. Die leitenden Teilchen, die ihre Ladung bereits an die Walze abgegeben haben, erfahren sodann im statischen Feld eine Influenzierung und damit eine stärkere Ablenkung.

Die Elektrodenspannung kann 10—50 kV betragen.

Die Walzenumdrehung kann bei den Walzenscheidern 50—250 Umdrehungen pro Minute betragen.

Nach einer weiteren Ausführungsform des erfindungsgemäßen Verfahrens ist es vorteilhaft, wenn die trockenen Rückstände größer 10 mm, vorzugsweise größer 3 mm, zur Abtrennung von kohlenstoffärmeren, mineralstoffreicheren Fraktionen unter 100°C, vorzugsweise 50°C, abgekühlt und in eine wässrige Phase gegeben werden.

Wird der abgekühlte Rückstand in Wasser gegeben, dann sinken nicht nur die Schwerteile, wie Glas, Steine, Metalle und Keramik, ab und scheiden sich von den leichteren kunststoffhaltigen Stoffen, sondern auch ein Teil der kohlenstoffärmeren, mineralstoffreicheren Fraktionen. Die aufschwimmenden Teile sind kohlenstoffreicher und mineralstoffärmer. Sie können von der Wasseroberflache abgezogen werden.

Weiterhin kann bei diesem erfindungsgemäßen Verfahren aus dem anfallenden trockenen Rückstand die Fraktion 1 bis 10 mm durch Siebung abgetrennt werden.

Zur Siebung kann der aus dem Reaktor kommende Rückstand heiß oder kalt eingesetzt werden. Die Siebung dient der Abtrennung der Großteile, wie Steine, Glasstücke, Keramik und Metallteile, und weiterhin der Abtrennung des Feinstaubes. Es sind hierfür alle Arten von Siebvorrichtungen geeignet, insbesondere Schwingsiebe.

Besonders vorteilhaft kann das erfindungsgemäße Verfahren angewendet werden, wenn ein Rückstand eingesetzt wird, der aus der Entgasung und/oder Vergasung von kohlenstoffhaltigen Abfallstoffen und Abfallstoffgemischen bei Temperaturen um 350 bis 650°C, vorzugsweise 400 bis 550°C, anfällt. Es handelt sich bei diesen Rücktänden um ein Gemisch Kohlenstoff und Mineralstoffen, dessen Kohlenstoffgehalt im Bereich 10 bis 20% liegt. Ohne die erfindungsgemäße Trennung in kohlenstoffärmere und kohlenstoffreichere Fraktionen ist eine Verwertung dieses Rückstandes nicht möglich.

Mit Vorteilen wird das erfindungsgemäße Verfahren auch dann angewendet, wenn den einzusetzenden Abfallstoffen vor und/oder während der Temperaturbehandlung basische Zusatzstoffe zugesetzt werden.

Durch den Zusatz der basischen Bestandteile werden die bei der Pyrolyse entstehenden sauren Stoffe, wie Fluorwasserstoff, Chlorwasserstoff, Schwefelwasserstoff, Schwefeldioxid und auch Blausäure, in den Rückstand eingebunden. Bei der Durchführung dieses erfindungsgemäßen Verfahrens stören die gebildeten Salze nicht. Aufgrund ihrer Dichte und ihrer elektrischen Eigenschaften finden sie sich vorwiegend in dem kohlenstoffärmeren, mineralstoffreicheren Fraktionen.

Als besonders günstig hat sich das erfindungsgemäße Verfahren erwiesen, wenn ein Rückstand eingesetzt wird, der aus der thermischen Behandlung von Gemischen aus kohlenstoffhaltigen Abfallstoffen und kohlenstoffhaltigen organischen Stoffen, wie Steinkohle, Braunkohle, Waschberge, Flotationskohle, Ruße und dergleichen, stammt.

Insbesondere Waschberge, Braunkohle und Flotationskohlen weisen einen hohen Anteil an Mineralstoffen auf. Nach dem erfindungsgemäßen Verfahren können ohne viel technischen Aufwand aus dem anfallenden Rückstand kohlenstoffärmere, mineralstoffreichere Fraktionen abgetrennt werden.

Bei der Durchführung des erfindungsgemäßen Verfahrens ergeben sich somit erhebliche Vorteile. So kann insgesamt das Volumen des zu beseitigenden Rückstandes erheblich reduziert werden. Durch die Abtrennung der kohlenstoffärmeren, mineralstoffreicheren Fraktionen verbleibt eine kohlenstoffreichere, heizwertreichere, mineralstoffärmere Fraktion, die energetisch oder stofflich anderweitig genutzt werden kann.

Für die kohlenstoffärmeren mineralstoffreicheren Fraktionen ergeben sich zusätzliche günstige Verwertungsmöglichkeiten, da der Anteil der löslichen Substanzen vermindert worden ist. Mit den kohlenstoffreicheren, mineralstoffärmeren Fraktionen werden nämlich auch wasserlösliche Substanzen mit entfernt. Die verringerte Wasserlöslichkeit der kohlenstoffärmeren, mineralstoffreicheren Fraktionen erleichtert damit die Deponierung und auch die Verwertung, z.B. im Straßenbau, bei der Herstellung von Betonsteinen oder beim Einsatz als Füllmaterial. Es ist dabei auch eine Ablagerung in durchlässigen Böden oder der Einsatz im Straßenbau in Wassereinzugsgebieten möglich.

Die mit den kohlenstoffreicheren, mineralstoffärmeren Fraktionen ausgetragenen Salze, vorwiegend Chloride, wirken sich z.B. bei der Verbrennung nicht störend aus, da diese in einer wasserlosen Atmosphäre erfolgt und die Hydrolyse der Salze zu Chlorwasserstoff unterbleibt. Eine Emission von Chlorwasserstoff findet demnach nur in begrenztem Maße statt.

Die kohlenstoffreicheren, mineralstoffärmeren Fraktionen können einer externen Nutzung in Kohlekraftwerken zugeführt werden. Hierbei ergibt sich ein hoher energetischer Wirkungsgrad, der wesentlich höher ist, als wenn der eingesetzte Abfall auf Rosten in Abfallverbrennungsanlagen verbrannt worden wäre.

Die kohlenstoffreichere Fraktion kann insbesondere in Kraftwerken mit Staubfeuerung günstig verbrannt werden. Bei Bedarf kann die kohlenstoffhaltige Fraktion ohne weitere Probleme aufgrund der Sprödigkeit zu Feinstaub vermahlen werden.

Ein weiterer Vorteil des erfindungsgemäßen Verfahrens ist darin zu sehen, daß ein stapelbarer, geruchsneutraler Brennstoff gewonnen werden kann, der bei Bedarf verbrannt werden kann.

Weterhin ergibt sich für die kohlenstoffreichere, mineralstoffärmere Fraktionen die Möglichkeit, diese als Rohstoff zur Herstellung von Aktivkohle oder als Füllstoffe und auch als Pigmente einzusetzen.

Wird der anfallende Rückstand der pyrolyse von Abfallstoffen nach dem erfindungsgemäßen Verfahren behandelt und die kohlenstoffreichere, mineralstoffärmere Fraktion der externen energetischen Nutzung zugeführt, dann entfallen die Innevestitionsmaßnahmen für eine interne eigenenergetische Nutzung. Dies betrifft insbesondere die Investitionen für Brennkammer, Kessel und Turbine.

Ein nicht zu übersehender umweltpolitscher Vorteil ergibt sich auch aus der Reduzierung der Schadstoffemission auf dem Luftwege. Die Verbrennung der kohlenstoffreichen, mineralstoffarmen Fraktionen erfolgt nämlich in trockener Atmosphäre. Die Hydrolyse der Chloride entfällt weitgehend, so daß der Ausstoß an Chlorwasserstoff gering bleibt. Die Schwefelbestandteile der heizwertreichen, mineralstoffarmen Fraktionen führt bei der Verbrennung zur Bildung von Schwefeldioxid, das wiederum sich mit den Schwermetallen zu schwerlöslichen und schwerflüchtigen Schwermetallsulfaten umsetzen kann.

Werden die kohlenstoffreicheren, mineralstoffärmeren Fraktionen in Kohlekraftwerken verbrannt, so tritt eine Agglomeration der feinkörnigen Stäube aus der Verbrennung dieser kohlenstoffreicheren Fraktionen mit dem gröberen Korn aus der Verbrennung der Kohle auf. Diese agglomerierten Stäube lassen sich dann ohne Schwierigkeiten in Elektrofiltern abscheiden.

Die Erfindung sei nachfolgend anhand eines Ausführungsbeispieles näher erläutert, woraus weitere vorteilhafte Einzelheiten entnommen werden können.

Ausführungsbeispiel

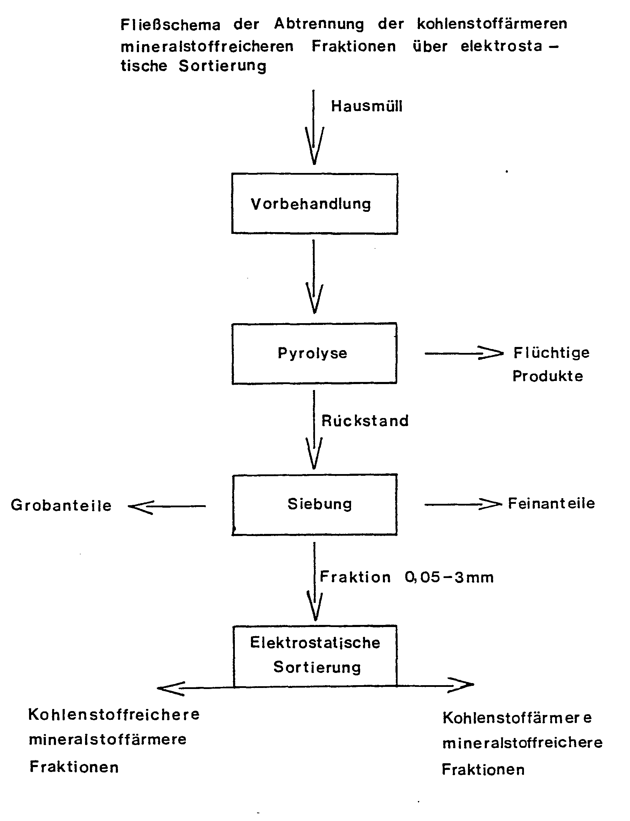

Diese bevorzugte Ausführungsform des erfindungsgemäßen Verfahrens wird im folgenden anhand eines in der Zeichnung schematisch veranschaulichten Verfahrensstammbaumes näher erläutert. Die in der Technik bereits bekannten Einzelvorrichtungen, wie Pyrolysereaktor, Vorrichtungen zur mechanischen Trennung und die elektrostatischen Scheidevorrichtungen sind in diesem Verfahrensstammbaum als beschriftete Blöcke wiedergegeben.

Dargestellt wird das Verfahren anhand der Behandlung von Hausmüll.

Der angelieferte Hausmüll gelangt zuerst in eine Vorzerkleinerungseinrichtung, zum Beispiel eine Ketten-Hammermuhle oder in ein Walzenschneidgerät die ein, gute Auflockerung der verschiedenen Müllbestandteile bewirkt und die sperrigen Anteile zerkleinert, während die restlichen Komponenten nach Möglichkeit zerkleinert werden. Es handelt sich um eine schonende Vorzerkleinerung.

Aus dieser Vorzerkleinerungseinrichtung gelangt der Abfall in eine Siebung zur Abtrennung von Rohmüll-Feinanteilen wie Asche, Sand und dergleichen. Geeignet sind Siebtrommeln und/oder Spannwellsiebe mit einer Maschenweite von 10 bis 30 mm.

Es ist jedoch auch möglich, auf eine derartige Vorsiebung zu verzichten.

Die Vorabsiebung erhöht den Heizwert des entgasten Abfalles durch Entfernen des Inertanteiles Der auf diese Weise vorbehandelte und auch unvorbehandelte Hausmüll gelangt in den außenbeheizten Pyrolysereaktor, der in den meisten Fällen ein außenbeheiztes Drehrohr darstellt. Dort werden die Abfälle unter Luftabschluß auf Temperaturen von 300 bis 600°C, vorzugsweise jedoch auf 300—450°C erhitzt, und dabei pyrolytisch in flüchtige Substanzen und einen festen Rückstand zersetzt. Die entstehenden flüchtigen Produkte werden aus der Pyrolysevorrichtung abgezogen, was entweder im Gleichstrom zur Durchlaufrichtung der Abfälle durch das Drehrohr oder im Gegenstrom erfolgen kann. Die abgezogenen Pyrolysegase werden entstaubt und in den meisten Fällen einer sofortigen energetischen Nutzung zur Beheizung des Pyrolysereaktors und zur Gewinnung von Dampf oder Strom verbrannt. Es ist auch möglich, die abgezogenen Pyrolysegase, einer Reinigung zur Entfernung der sauren Bestandteile zu unterwerfen.

Der anfallende Rückstand wird gasdicht ausgetragen. Die Abdichtung erfolgt dabei über den Rückstand selbst. Für die weitergehende Behandlung werden sie auf Temperaturen unterhalb 150°C abgekühlt.

Da der Rückstand aufgrund der pyrolytischen Behandlung und des Trockenaustrages in loser Schüttung anfällt, können die gröberen Inertstoffe, wie Eisen, Glas, Steine, Keramik, Drahtgeflechte, Nichteisenmetalle udgl., durch Siebung abgetrennt werden, des gleichen die störenden Feinanteile kleiner 0,01 mm, vorzugsweise kleiner 0,05 mm.

Die auf diese Weise gewonnene Fraktion im Körnungsbereich von 0,01 mm bis 10 mm, vorzugsweise im Bereich von 0,05 mm bis 3 mm, kann nun ohne weitere Vorbehandlung der elektrostatischen Sortierung unterworfen werden. Mit einem Walzenscheider mit dynamischem Feld, an dem eine Gleichspannung von 30 kV angelegt ist, und dessen Umdrehungsgeschwindigkeit vorzugsweise im Bereich von 100—200 Umdrehungen pro Minute gehalten wird, lassen sich ohne Schwierigkeiten aus dem Rückstand kohlenstoffärmere, mineralstoffreichere Fraktionen abtrennen. Die verbleibenden kohlenstoffreicheren, mineralstoffärmeren Fraktionen werden aufgefangen und können den obigen Verwendungsmöglichkeiten zugeführt werden.

Bei dieser Arbeitsweise kann z.B. aus einem Hausmüll, der 20% Wasser enthält, ein Rückstand gewonnen werden, der bei der Siebung einen Grobanteil größer 3 mm von 18,6% und einen Feinanteil kleiner 0,05 mm von 3,6% aufweist. Insgesamt beträgt demnach der Anteil des Abgesiebten 22,2%. Es verbleibt ein weiter zu behandelnder Rückstand, dessen Kohlenstoffgehalt, bestimmt als Glühverlust (550°C), 16% beträgt. Dieser vom Fein- und Grobanteil befreite trockene Rückstand liefert bei der elektrostatischen Sortierung eine kohlenstoffreiche, mineralstoffarme und eine kohlenstoffarme, mineralstoffreiche Fraktion. Es werden aus 1 kg der Fraktion 0,05 bis 3 mm rd. 250 g der kohlenstoffreichen, mineralstoffarmen Fraktion mit einem Kohlenstoffgehalt von rd. 48% erhalten. Der untere Heizwert beträgt 3.840 kcal/kg. Der Anteil der kohlenstoffärmeren, mineralstoffreicheren Fraktion beträgt rd. 750 Gramm, wobei der Kohlenstoffgehalt zu 5,6% bestimmt wurde. Vom Heizwert des Rückstandes finden sich somit in der kohlenstoffreicheren, mineralstoffärmeren Fraktion rd. 75% wieder.

Das erfindungsgemäße Verfahren kann nicht nur zur Behandlung von Hausmüll, sondern auch für Klärschlamm, Shredderabfälle, Altreifen, Lackabfälle, Kunststoffabfälle, pflanzliche Reststoffe wie Stroh oder Holz, Papierabfälle und dergleichen verwendet werden. Sie können für sich allein oder im Gemisch eingesetzt werden.

## Patentansprüche

1. Verfahren zur Aufbereitung des bei der thermischen Behandlung, insbesondere Pyrolyse, von kohlenstoffhaltigen Abfallstoffen entstehenden Rückstandes zwecks Gewinnung von Brennstoffen, wobei aus dem Rückstand wenigstens eine kohlenstoffärmere, mineralstoffreichere Fraktion und eine kohlenstoffreichere, mineralstoffärmere Fraktion gewonnen wird, gekennzeichnet durch folgende Verfahrensschritte:

a) aus dem anfallenden Rückstand werden zunächst mindestens die Bestandteile mit einer Körnung größer 10 mm und kleiner 0,01 mm abgetrennt;

b) der verbleibende Teil des Rückstandes wird sodann auf eine Temperatur unterhalb 150°C abgekühlt und auf einen Wassergehalt von 0,2—5 Gew.-% gebracht;

c) anschließend wird dieser Teil des Rückstandes durch elektrostatische Sortierung in eine kohlenstoffärmere, mineralstoffreichere Fraktion und eine kohlenstoffreichere, mineralstoffärmere Fraktion getrennt.

2. Verfahren nach Anspruch 1, dadurch gekennzeichnet, daß aus dem anfallenden Rückstand zunächst die Bestandteile mit einer Körnung größer 3 mm und kleiner 0,05 mm abgetrennt werden.

3. Verfahren nach Anspruch 1, dadurch gekennzeichnet, daß der verbleibende Teil des Rückstandes auf eine Temperatur unterhalb 100°C, vorzugsweise 50°C, abgekühlt wird.

4. Verfahren nach Anspruch 1, dadurch gekennzeichnet, daß der verbleibende Teil des Rückstandes auf einen Wassergehalt von 0,5—2% gebracht wird.

5. Verfahren nach Anspruch 1, dadurch gekennzeichnet, daß ein Rückstand eingesetzt wird, der aus einer Entgasung und/oder Vergasung von kohlenstoffhaltigen Abfallstoffen bei Temperaturen von 350—650°C, vorzugsweise 400—550°C, anfällt.

6. Verfahren nach Anspruch 1, dadurch gekennzeichnet, daß ein Rückstand eingesetzt wird, der bei einer thermischen Behandlung anfällt, bei der den kohlenstoffhaltigen Abfallstoffen vor und/oder während der thermischen Behandlung basische Zusatzstoffe zugesetzt werden.

7. Verfahren nach Anspruch 1, dadurch gekennzeichnet, daß ein Rückstand eingesetzt wird, der aus der thermischen Behandlung von Gemischen aus kohlenstoffhaltigen Abfallstoffen und kohlenstoffhaltigen organischen Stoffen, wie Steinkohle, Braunkohle, Waschberge, Flotationskohle, Ruße und dgl. stammt.

## Revendications

1. Procédé de préparation du résidu provenant du traitement thermique, en particulier de la pyrolyse, de rebuts carbonés en vue de la production de combustibles, au moins une fraction pauvre en carbone et riche en substances minérales et une fraction riche en carbone et pauvre en substances minérales étant récupérées du résidu, caractérisé par les phases suivantes:

a) tout d'abord au moins les composants ayant une granulométrie supérieure à 10 mm et inférieure à 0,01 mm sont séparés du résidu produit;

b) la partie restante du résidu subit ensuite un refroidissement à une température inférieure à 150°C et sa teneur en eau est amenée à 0,2—5% en poids;

c) ensuite, cette partie du résidu est divisée par triage électrostatique en une fraction pauvre en carbone et riche en substances minérales et une fraction riche en carbone et pauvre en substances minérales.

2. Procédé selon la revendication 1, caractérisé en ce que tout d'abord les composants ayant une granulométrie supérieure à 3 mm et inférieure à 0,05 mm sont séparés du résidu récupéré.

3. Procédé selon la revendication 1, caractérisé en ce que la partie restante du résidu subit un refroidissement à une température inférieure à 100°C, de préférence à 50°C.

4. Procédé selon la revendication 1, caractérisé en ce que la teneur en eau de la partie restante du résidu est portée à 0,5—2%.

5. Procédé selon la revendication 1, caractérisé en ce que le résidu utilisé provient d'un dégazage et/ou d'une gazéification de rebuts carbonés à des températures de 350—650°C, de préférence 400—550°C.

6. Procédé selon la revendication 1, caractérisé en ce que le résidu utilisé provient d'un traitement thermique au cours duquel des additifs basiques sont ajoutés aux rebuts carbonés avant et/ou pendant le traitement thermique.

7. Procédé selon la revendication 1, caractérisé en ce que le résidu utilisé est issu du traitement thermique de mélanges de rebuts carbonés et de matières organiques carbonées telles que la houille, la lignite, des schistes de lavage, du charbon de flottation, de la suie et analogues.

## Claims

1. Method for preparing the residue resulting from heat treatment, especially pyrolysis, of carbonaceous refuse in order to obtain fuels, in which at least one fraction which is lower in carbon and higher in mineral substances and one fraction which is higher in carbon and lower in mineral substances are obtained from the residue, characterised by the following method steps:

a) first of all at least the components with a grain size greater than 10 mm and smaller than 0.01 mm are separated out of the residue obtained:

b) the remaining part of the residue is then cooled to a temperature below 150°C and brought to a water content of 0.2—5% by weight:

c) then this part of the residue is separated by electrostatic sorting into a fraction which is lower in carbon and higher in mineral substances and a fraction which is higher in carbon and lower in mineral substances.

2. Method as claimed in claim 1, characterised in that first of all the components with a grain size greater than 3 mm and smaller than 0.05 mm are separated out of the residue obtained.

3. Method as claimed in claim 1, characterised in that the remaining part of the residue is cooled to a temperature below 100°C, preferably 50C°.

4. Method as claimed in claim 1, characterised in that the remaining part of the residue is brought to a water content of 0.5—2%.

5. Method as claimed in claim 1, characterised in that a residue is used which results from the degasification and/or gasification of carbonaceous waste materials at temperatures of 350—650°C, preferably 400—550°C.

6. Method as claimed in claim 1, characterised in that a residue is used which results from heat treatment in which basic additives are added to the carbonaceous waste materials before and/or during the heat treatment.

7. Method as claimed in claim 1, characterised in that a residue is used which originates from the heat treatment of mixtures of carbonaceous waste materials and carbonaceous organic materials, such as mineral coal, brown coal, mine washing waste, flotation coal, soot and the like.

Fließschema der Abtrennung der kohlenstoffärmeren mineralstoffreicheren Fraktionen über elektrosta – tische Sortierung

↓ Hausmüll

| Vorbehandlung |

↓

| Pyrolyse | ——⟶ Flüchtige Produkte

↓ Rückstand

Grobanteile ⟵—— | Siebung | ——⟶ Feinanteile

↓ Fraktion 0,05 – 3mm

| Elektrostatische Sortierung |

⟵—————————————⟶

Kohlenstoffreichere mineralstoffärmere Fraktionen

Kohlenstoffärmere mineralstoffreichere Fraktionen